# EUROPÄISCHE PATENTSCHRIFT

(11) **EP 1 050 360 B1**
(45) Veröffentlichungstag und Bekanntmachung des Hinweises auf die Patenterteilung: **21.12.2005**
(21) Anmeldenummer: 00100764.0
(22) Anmeldetag: 15.01.2000
(51) Int. Cl.: B23B 31/12, B23B 31/26

(54) **Zangenbolzenfutter**
Chuck
Mandrin

(30) Priorität: 05.05.1999 DE 19920763
(43) Veröffentlichungstag der Anmeldung: 08.11.2000
(73) Patentinhaber: Röhm GmbH, 89567 Sontheim (DE)
(72) Erfinder: Taglang, Johann, 89441 Medlingen (DE)
(74) Vertreter: Hentrich, Swen

(56) Entgegenhaltungen:
- US-A- 3 560 009
- US-A- 3 927 873
- US-A- 4 300 780
- US-A- 4 570 949

## Beschreibung

Die Erfindung betrifft ein Zangenbolzenfutter zum Spannen von Werkstücken auf einer Werkzeugmaschine, mit einer Mehrzahl von gleichmäßig über den Umfang verteilt, geneigt zur Futterachse in Führungsaufnahmen des Futterkörpers angeordneten Zangenbolzen, die in eine erste Gruppe zentrisch spannender Zangenbolzen und in eine zweite Gruppe ausgleichend spannender Zangenbolzen eingeteilt und durch eine in axialer Richtung verstellbare Spannplatte in radialer Richtung verstellbar sind.

Bei der Bearbeitung von verformungsempfindlichen Teilen, wie Bremsscheiben, Lagerringen oder dergl., an drehenden Werkzeugmaschinen, die ein rotationssymmetrisches Arbeitsergebnis liefern, ist es zum einen wichtig, daß die Werkstücke, die nicht exakt rund sein müssen, genau zentrisch gespannt werden, und daß zum anderen weiterhin beim zentrischen Spannen diesen Werkstücken keine Verformung aufgezwungen wird, die zwar im gespannten Zustand zu einem rotationssymmetrischen Arbeitsergebnis führt, im ausgespannten Zustand nach der Relaxation der Verformung jedoch ein unrundes Werkstück ergibt. Um dieses Problem zu mildern, ist es bekannt, die zur Verfügung stehenden Zangenbolzen in zwei Gruppen unterschiedlicher Funktion einzuteilen, von denen die erste Gruppe das zentrische Spannen sicherstellen soll, während die zweite Gruppe die Funktion hat, ausgleichend auf das Werkstück einzuwirken, um eine Verformung zu verhindern. Bei den bekannten Zangenbolzenfutter ist aber keine ausreichende Genauigkeit und Feinfühligkeit bei der Erhöhung der Spannkraft hinsichtlich des zentrischen und des ausgleichenden Spannens vorhanden, und zwar unabhängig davon, ob ein gemeinsamer oder ein getrennter Antrieb für die beiden Gruppen von Zangenbolzen zur Verfügung steht.

Aus der US 3 927 983 ist ein Spannfutter zum Spannen von Trinkgläsern bekannt, bei dem die Spannbacken in zwei Gruppen aufgeteilt sind, die in unterschiedlichen radialen Ebenen, axial gestaffelt am Trinkglas greifen. Dabei werden die dem Boden zugeordneten Spannbacken durch Verschieben einer Spannhülse zuerst zur Anlage gebracht und bewirken dessen Spannung, während nachfolgend durch fortgesetztes Verschieben der Spannhülse die Spannbacken der zweiten Gruppe zum zentrischen Spannen sich am Trinkglas anlegen und dessen zentrische Ausrichtung bewirken, indem das Trinkglas um ein Gelenk verschwenkt wird.

Die US 4 300 780 offenbart ein Spannfutter, bei dem die wie üblich in einer gemeinsamen radialen Ebene angeordneten Spannbacken in zwei Gruppen eingeteilt sind, die nacheinander mit geringem Spanndruck am Werkstück zur Anlage gebracht werden, um nachfolgend simultan mit hohem Spanndruck zum Erreichen der vollen Spannkraft verstellt zu werden.

Der Erfindung liegt die Aufgabe zugrunde, ein Zangenbolzenfutter der eingangs genannten Art so auszubilden, daß auch bei voller auf das Werkstück ausgeübter Spannkraft dessen Verformung vermieden wird.

Diese Aufgabe wird bei einem Zangenbolzenfutter der eingangs genannten Art dadurch gelöst, daß die Spannplatte geteilt in eine der ersten Gruppe zugeordnete erste Spannplatte und eine der zweiten Gruppe zugeordnete zweite Spannplatte ausgeführt ist, die über ein Waagebalkensystem miteinander gekoppelt sind, das eine gegenüber der zweiten Gruppe vorzeitige Anlage der ersten Gruppe an dem Werkstück bewirkt. Die Erfindung bietet den Vorteil, daß über das Waagebalkensystem die Zangenbolzen der ersten Gruppe zuerst an das Werkstück herangeführt werden und dieses zentrisch ausrichten können und erst dann die Zangenbolzen der zweiten Gruppe zum ausgleichenden Spannen zur Anlage kommen, und daß dann bei nachfolgender Spannkrafterhöhung die erste Spannplatte und die zweite Spannplatte in ihrer relativen Ausrichtung zueinander festgelegt sind und so durch den gemeinsamen Antrieb die Spannkrafterhöhung bei allen beteiligten Zangenbolzen sich gleichmäßig auswirkt, unabhängig von deren Zuordnung zur ersten Gruppe oder zur zweiten Gruppe.

Eine ganz besonders bevorzugte Ausführungsform der Erfindung ist dadurch gekennzeichnet, daß das Waagebalkensystem gebildet ist durch eine in axialer Richtung verstellbare Zugstange, die an der der ersten Spannplatte und der zweiten Spannplatte zugewandten Seite eine Aufnahme aufweist, in deren Wandung eine radiale Bohrung ausgebildet ist, daß die erste Spannplatte mit einem Plattenkolben in die Aufnahme ragt und die zweite Spannplatte mit einer Plattenhülse außen an der Zugstange vorbei geführt ist, daß zur Übertragung der Bewegung der Zugstange ein in der radialen Bohrung der Wandung schwenkbares Koppelglied die radiale Bohrung durchsetzt und mit seinen überstehenden Enden mit dem Plattenkolben und der Plattenhülse gekoppelt ist, und daß zwischen der Zugstange und der zweiten Spannplatte ein in axialer Richtung wirkendes Vorlaufglied eingesetzt ist. Bei dieser Ausführungsform wird durch eine auf die Zugstange ausgeübte Zugkraft die erste Spannplatte in axialer Richtung verstellt, wodurch die Zangenbolzen der ersten Gruppe sich nureinig radial bewegen, bis die Wirkung des Vorlaufgliedes überwunden ist und auch die Zangenbolzen der zweiten Gruppe durch eine axiale Verstellung der zweiten Spannplatte radial verstellt werden. Unter der Wirkung des Vorlaufgliedes und des Koppelgliedes kann dabei die zweite Spannplatte relativ zur Futterachse verschwenken, so daß nicht nur einseitig durch einen Zangenbolzen der zweiten Gruppe Kraft auf das Werkstück ausgeübt wird, sondern aufgrund der Taumelstellung der zweiten Spannplatte ein ausgleichendes Spannen erreicht wird. Bei nachfolgender Erhöhung der Spannkraft wird die relative Lage der ersten Spannplatte zu der zweiten Spannplatte beibehalten, so daß sämtliche Zangenbolzen gleichmäßig zur Spannkraft beitragen.

Bei einer hinsichtlich der Einfachheit ihres Aufbaus bevorzugten Ausführungsform ist das Vorlaufglied durch eine Druckfeder gebildet.

Ist jedoch das Vorlaufglied durch einen über einen Druckmittelanschluß betätigbaren Druckkolben gebildet, besteht die Möglichkeit, den Vorlauf der ersten Gruppe von Zangenbolzen gegenüber der zweiten Gruppe über eine Variation des Druckes und damit der Kraft zu regulieren.

Um eine definierte Ausgangslage zu haben, bei der sich die zweite Spannplatte im unbelasteten Zustand in der Mittelstellung befindet, ist die zweite Spannplatte zweiteilig mit der Plattenhülse und einer Plattenscheibe ausgebildet, zwischen denen mindestens drei in axialer Richtung wirkende Ausgleichsglieder angeordnet sind. Zweckmäßigerweise sind dabei die Ausgleichsglieder durch Druckfedern gebildet. Alternativ ist es gleichfalls möglich, daß die Ausgleichsglieder durch über einen Druckmittelanschluß betätigbaren Druckkolben gebildet sind.

Um die Fertigung zu vereinfachen und die Ausgleichsglieder zwischen der Plattenhülse und der Plattenscheibe anordnen zu können, ist die Plattenhülse mit einem Kalotteneinsatz zugfest verbunden, der mit einem Ringbund in eine Bundaufnahme der Plattenscheibe auf der der Plattenhülse abgewandten Seite eingreift. Das Einführen des Ringbundes in die Bundaufnahme bietet dabei die Möglichkeit, daß eine plane Vorderseite zur Verfügung steht, auf der die erste Spannplatte an beliebiger, je nach der Taumelstellung der zweiten Spannplatte bestimmter Stelle zur Anlage kommen kann und so die dabei erzielte Abstützung zur gleichmäßigen Einleitung der Spannkraft beiträgt.

Da über die Koppelglieder die Spannkraft von der Zugstange in die erste Spannplatte und die zweite Spannplatte eingeleitet wird, ist es vorteilhaft, wenn mehrere der Koppelglieder gleichmäßig über den Umfang der Aufnahme verteilt in radialen Bohrungen angeordnet sind.

Damit sich das Koppelglied in der radialen Bohrung entsprechend der relativen axialen Verschiebung von erster Spannplatte und zweiter Spannplatte verstellen kann, weist das Koppelglied neben einem zentralen Wulst auf jeder Seite eine Verjüngung auf.

Die Genauigkeit der zentrischen Spannung der Zangenbolzen aus der ersten Gruppe hängt davon ab, wie präzise die erste Spannplatte rein in axialer Richtung verstellt wird. Um dabei eine hohe Genauigkeit zu erreichen, ist die erste Spannplatte mit einem Plattenbund in dem Futterkörper geführt.

Im folgenden soll die Erfindung an in der Zeichnung dargestellten Ausführungsbeispielen näher erläutert werden; es zeigen:
- Fig. 1: einen Längsschnitt durch ein erfindungsgemäßes Zangenbolzenfutter, mit dem durch eine Druckfeder gebildeten Vorlaufglied,
- Fig. 2: eine der Fig. 1 entsprechende Darstellung, mit einem durch den Druckkolben gebildeten Vorlaufglied, und

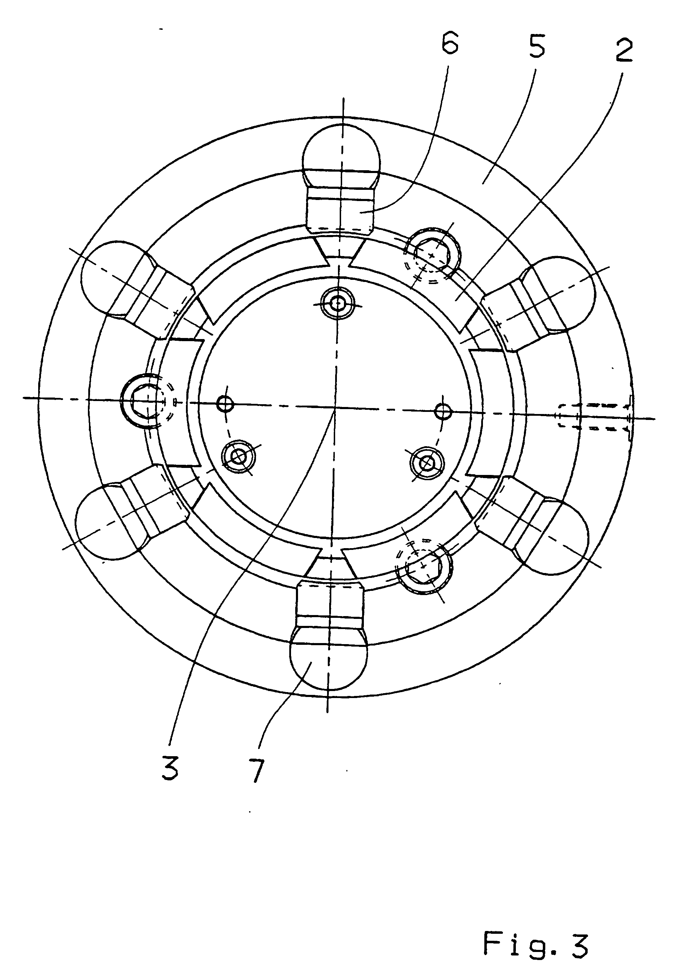

- Fig. 3: eine Sicht aus Richtung des Pfeiles III aus Fig. 1.

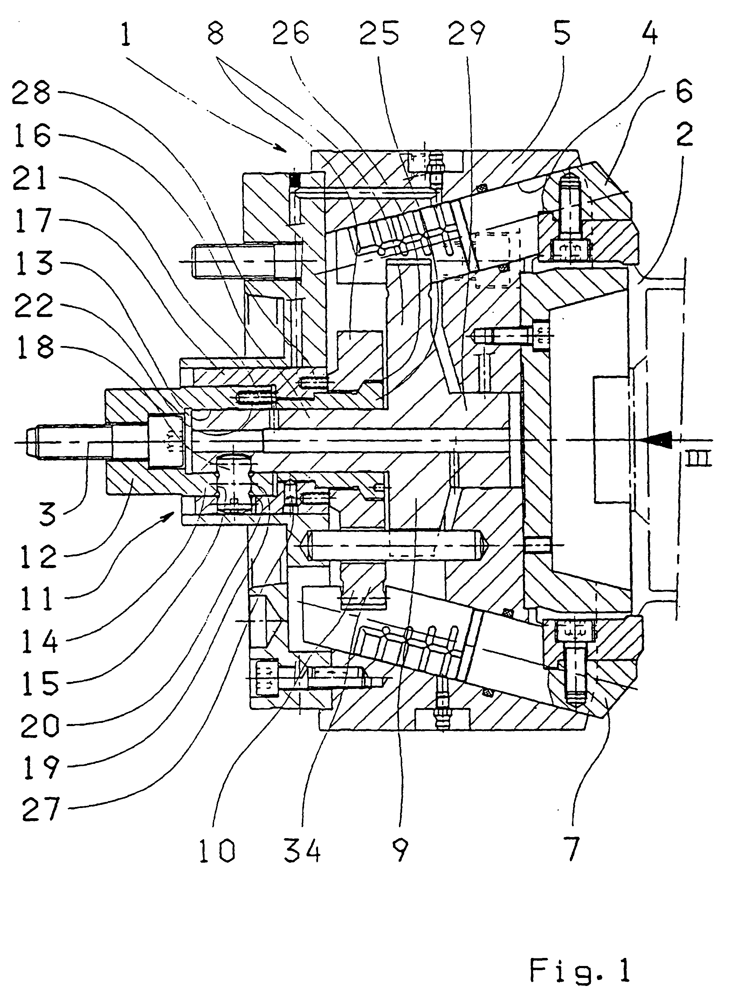

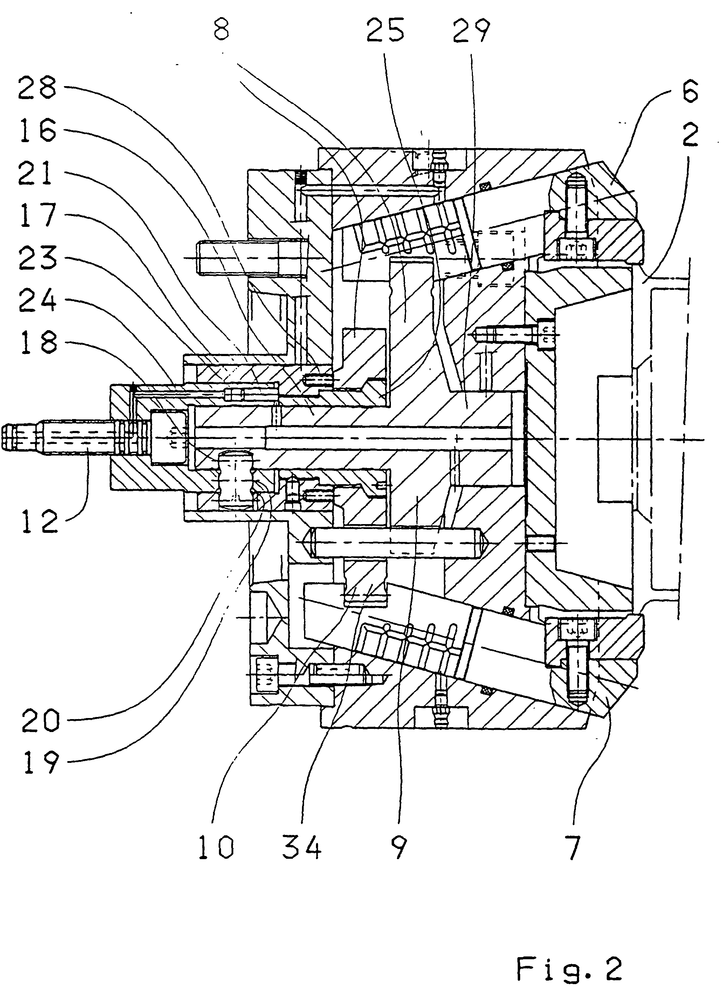

Das in der Zeichnung dargestellt Zangenbolzenfutter 1 dient zum Spannen von Werkstücken 2 auf einer rotierend antreibbaren, selber nicht dargestellten Werkzeugmaschine. Das Zangenbolzenfutter 1 weist eine Mehrzahl von gleichmäßig über den Umfang verteilte, geneigt zur Futterachse 3 in Führungsaufnahmen 4 des Futterkörpers 5 angeordnete Zangenbolzen 6,7 auf, wobei die Zangenbolzen 6,7 in eine erste Gruppe zentrisch spannender Zangenbolzen 6 und in eine zweite Gruppe ausgleichend spannender Zangenbolzen 7 eingeteilt sind. Sowohl die Zangenbolzen 6 der ersten Gruppe als auch die Zangenbolzen 7 der zweiten Gruppe sind durch eine in axialer Richtung verstellbare Spannplatte 8 in radialer Richtung zum Einspannen des Werkstücks 2 verstellbar. Die Spannplatte 8 ist geteilt in eine erste Spannplatte 9 und eine zweite Spannplatte 10 ausgeführt, wobei die erste Spannplatte 9 der ersten Gruppe und die zweite Spannplatte 10 der zweiten Gruppe zugeordnet ist. Die erste Spannplatte 9 und die zweite Spannplatte 10 sind über ein Waagebalkensystem 11 miteinander gekoppelt, das durch eine in axialer Richtung verstellbare Zugstange 12 gebildet ist, die an der der ersten Spannplatte 9 und der zweiten Spannplatte 10 zugewandten Seite eine Aufnahme 13 aufweist, in deren Wandung 14 eine radiale Bohrung 15 ausgebildet ist. In die Aufnahme 13 ragt die erste Spannplatte 9 mit einem Plattenkolben 16, während die zweite Spannplatte 10 mit einer Plattenhülse 17 außen an der Aufnahme 13 der Zugstange 12 vorbeigeführt ist. Die Bewegung der Zugstange 12 wird durch ein Koppelglied 18, das schwenkbar in der radialen Bohrung 15 der Wandung 14 der Aufnahme 13 gelagert ist, auf die erste Spannplatte 9 und die zweite Spannplatte 10 übertragen. Das Koppelglied 18 ist dazu mit seinen aus der radialen Bohrung 15 vorstehenden Enden mit dem Plattenkolben 16 und der Plattenhülse 17 verbunden und weist neben einem zentralen Wulst 19 auf jeder Seite eine Verjüngung 20 auf, damit es in der radialen Bohrung 15 verschwenken kann. Zwischen der Zugstange 12 und der zweiten Spannplatte 10 ist ein der Zugkraft in axialer Richtung entgegenwirkendes Vorlaufglied 21 eingesetzt, das gemäß der Ausführungsform aus Fig. 1 durch eine Druckfeder 22 und gemäß der in Fig. 2 gezeigten Ausführungsform durch einen über einen Druckmittelanschluß betätigbaren Druckkolben 23 realisiert ist.

Die zweite Spannplatte 10 ist mehrteilig aufgebaut und besteht aus einer Plattenscheibe 34 sowie der Plattenhülse 17, die wiederum zugfest mit einem Kalotteneinsatz 25 verbunden ist. Der Kalotteneinsatz 25 greift mit einem Ringbund 26 in eine Bundaufnahme auf der der Plattenhülse 17 abgewandten Seite der Plattenscheibe 34 ein. Zur zugfesten Verbindung von Plattenhülse 17 und Kalotteneinsatz 25 ist eine Sicherungsschraube 27 vorgesehen. Zwischen der Plattenhülse 17 und der Plattenscheibe 34 sind in axialer Richtung als Ausgleichsglieder 28 wirkende Druckfedern angeordnet, die dafür sorgen, daß die zweite Spannplatte 10 in dem unbelasteten Zustand eine Mittelstellung einnimmt.

Bei Betätigung der Zugstange 12 wird zunächst die erste Spannplatte 9, die mit einem Plattenbund 29 in dem Futterkörper 5 geführt ist, durch das Koppelglied 18 präzise in axialer Richtung verstellt, wobei das Vorlaufglied 21 gespannt wird und die zweite Spannplatte 10 sich unter Spannung der Ausgleichsglieder 28 aus ihrer Mittelstellung in eine Taumelstellung verstellt. Bei nachfolgender Erhöhung der Spannkraft wird über das Koppelglied 18 gleichmäßig sowohl die erste Spannplatte 9 als auch die zweite Spannplatte 10 verstellt.

## Patentansprüche

1. Zangenbolzenfutter zum Spannen von Werkstücken (2) auf einer Werkzeugmaschine, mit einer Mehrzahl von gleichmäßig über den Umfang verteilt, geneigt zur Futterachse (3) in Führungsaufnahmen (4) des Futterkörpers (5) angeordneten Zangenbolzen (6,7), die in eine erste Gruppe zentrisch spannender Zangenbolzen (6) und in eine zweite Gruppe ausgleichend spannender Zangenbolzen (7) eingeteilt und durch eine in axialer Richtung verstellbare Spannplatte (8) in radialer Richtung verstellbar sind, **dadurch gekennzeichnet, daß** die Spannplatte (8) geteilt in eine der ersten Gruppe zugeordnete erste Spannplatte (9) und eine der zweiten Gruppe zugeordnete zweite Spannplatte (10) ausgeführt ist, die über ein Waagebalkensystem (11) miteinander gekoppelt sind, das eine gegenüber der zweiten Gruppe vorzeitige Anlage der ersten Gruppe an dem Werkstück (2) bewirkt.

2. Zangenbolzenfutter nach Anspruch 1, **dadurch gekennzeichnet, daß** das Waagebalkensystem (11) gebildet ist durch eine in axialer Richtung verstellbare Zugstange (12), die an der der ersten Spannplatte (9) und der zweiten Spannplatte (10) zugewandten Seite eine Aufnahme (13) aufweist, in deren Wandung (14) eine radiale Bohrung (15) ausgebildet ist, daß die erste Spannplatte (9) mit einem Plattenkolben (16) in die Aufnahme (13) ragt und die zweite Spannplatte (10) mit einer Plattenhülse (17) außen an der Zugstange (12) vorbei geführt ist, daß zur Übertragung der Bewegung der Zugstange (12) ein in der radialen Bohrung (15) der Wandung (14) schwenkbares Koppelglied (18) die radiale Bohrung (15) durchsetzt und mit seinen überstehenden Enden mit dem Plattenkolben (16) und der Plattenhülse (17) gekoppelt ist, und daß zwischen der Zugstange (12) und der zweiten Spannplatte (10) ein in axialer Richtung der Zugkraft entgegen wirkendes Vorlaufglied (21) eingesetzt ist.

3. Zangenbolzenfutter nach Anspruch 2, **dadurch gekennzeichnet, daß** das Vorlaufglied (21) durch eine Druckfeder (22) gebildet ist.

4. Zangenbolzenfutter nach Anspruch 2, **dadurch gekennzeichnet, daß** das Vorlaufglied (21) durch einen über einen Druckmittelanschluß (24) betätigbaren Druckkolben (23) gebildet ist.

5. Zangenbolzenfutter nach einem der Ansprüche 2 bis 4, **dadurch gekennzeichnet, daß** die zweite Spannplatte (10) zweiteilig mit der Plattenhülse (17) und einer Plattenscheibe (34) ausgebildet ist, zwischen denen mindestens drei in axialer Richtung wirkende Ausgleichsglieder (28) angeordnet sind.

6. Zangenbolzenfutter nach Anspruch 5, **dadurch gekennzeichnet, daß** die Ausgleichsglieder (28) durch Druckfedern gebildet sind.

7. Zangenbolzenfutter nach Anspruch 5, **dadurch gekennzeichnet, daß** die Ausgleichsglieder (28) durch über einen Druckmittelanschluß betätigbare Druckkolben gebildet sind.

8. Zangenbolzenfutter nach einem der Ansprüche 5 bis 7, **dadurch gekennzeichnet, daß** die Plattenhülse (17) mit einem Kalotteneinsatz (25) zugfest verbunden ist, der mit einem Ringbund (26) in eine Bundaufnahme der Plattenscheibe (34) auf der der Plattenhülse (17) abgewandten Seite eingreift.

9. Zangenbolzenfutter nach einem der Ansprüche 2 bis 8, **dadurch gekennzeichnet, daß** mehrere der Koppelglieder (18) gleichmäßig über den Umfang der Aufnahme (13) verteilt in radialen Bohrungen (15) angeordnet sind.

10. Zangenbolzenfutter nach einem der Ansprüche 2 bis 9, **dadurch gekennzeichnet, daß** das Koppelglied (18) neben einem zentralen Wulst (19) auf jeder Seite eine Verjüngung (20) aufweist.

11. Zangenbolzenfutter nach einem der Ansprüche 1 bis 10, **dadurch gekennzeichnet, daß** die erste Spannplatte (9) mit einem Plattenbund (29) in dem Futterkörper (5) geführt ist.

## Claims

1. A collet pin chuck for clamping workpieces (2) on a machine tool, comprising a plurality of collet pins (6, 7) which are distributed uniformly over the periphery and which are arranged inclinedly relative to the chuck axis (3) in guide receiving means (4) of the chuck body (5) and which are divided into a first group of centrally clamping collet pins (6) and a second group of compensatingly clamping collet pins (7) and which are displaceable in the radial direction by a clamping plate (8) which is displaceable in the axial direction, **characterised in that** the clamping plate (8) is divided into a first clamping plate (9) associated with the first group and a second clamping plate (10) associated with the second group, the first and second clamping plates (9, 10) being coupled together by way of a balance beam system (11) which causes the first group to bear against the workpiece (2) prior to the second group.

2. A collet pin chuck according to claim 1 **characterised in that** the balance beam system (11) is formed by a draw bar (12) which is displaceable in the axial direction and which at the side towards the first clamping plate (9) and the second clamping plate (10) has a receiving means (13), in the wall (14) of which there is a radial bore (15), that the first clamping plate (9) projects with a plate piston (16) into the receiving means (13) and the second clamping plate (10) is guided with a plate sleeve (17) externally past the draw bar (12), that for transmission of the movement of the draw bar (12) a coupling member (18) which is pivotable in the radial bore (15) of the wall (14) passes through the radial bore (15) and is coupled with its projecting ends to the plate piston (16) and the plate sleeve (17), and that a forward movement member (21) acting in the axial direction in opposition to the draw force is inserted between the draw bar (12) and the second clamping plate (10).

3. A collet pin chuck according to claim 2 **characterised in that** the forward movement member (21) is formed by a compression spring (22).

4. A collet pin chuck according to claim 2 **characterised in that** the forward movement member (21) is formed by a pressure piston (23) actuable by way of a pressure fluid connection (24).

5. A collet pin chuck according to one of claims 2 to 4 **characterised in that** the second clamping plate (10) is of a two-part structure with the plate sleeve (17) and a plate disc (34), between which are arranged at least three compensating members (28) acting in the axial direction.

6. A collet pin chuck according to claim 5 **characterised in that** the compensating members (28) are formed by compression springs.

7. A collet pin chuck according to claim 5 **characterised in that** the compensating members (28) are formed by pressure pistons actuable by way of a pressure fluid connection.

8. A collet pin chuck according to one of claims 5 to 7 **characterised in that** the plate sleeve (17) is connected in fixed pulling relationship to a cup insert (25) which engages with an annular collar (26) into a collar receiving means of the plate disc (34) on the side remote from the plate sleeve (17).

9. A collet pin chuck according to one of claims 2 to 8 **characterised in that** a plurality of the coupling members (18) are disposed in radial bores (15) distributed uniformly around the periphery of the receiving means (13).

10. A collet pin chuck according to one of claims 2 to 9 **characterised in that** the coupling member (18) has a taper (20) on each side beside a central bead (19).

11. A collet pin chuck according to one of claims 1 to 10 **characterised in that** the first clamping plate (9) is guided with a plate collar (29) in the chuck body (5).

## Revendications

1. Mandrin à goujons de serrage pour serrer des pièces (2) sur une machine-outil, comportant une pluralité de goujons de serrage (6, 7) régulièrement répartis à la périphérie en étant inclinés par rapport à l'axe (3) du mandrin dans des logements de guidage (4) de celui-ci, ces goujons étant répartis en un premier groupe (6) assurant un serrage central et un second groupe (7) d'équilibrage du serrage, ces groupes pouvant être déplacés en direction radiale par une plaque de serrage (8) mobile en direction axiale, **caractérisé en ce que** la plaque de serrage (8) est divisée en une première plaque de serrage (9) associée au premier groupe et en une seconde plaque de serrage (10) associée au second groupe, ces plaques étant accouplées par un système à fléau de balance (11) qui assure la venue du premier groupe en contact avec la pièce (2) avant le second groupe.

2. Mandrin à goujons de serrage selon la revendication 1, **caractérisé en ce que** :
- le système à fléau de balance (11) est constitué par une tige de traction (12) mobile en direction axiale et qui présente sur sa face en regard de la première et de la seconde plaque de serrage (9, 10) un logement (13) dont la paroi (14) est percée d'un alésage radial (15),
- la première plaque de serrage (9) pénètre par un piston de plaque (16) dans le logement (13) tandis que la seconde plaque de serrage (10) est guidée par une douille de plaque (17) de manière à coulisser extérieurement le long de la tige de traction (12),
- pour transmettre le déplacement de la tige de traction (12), un organe d'accouplement (18) pouvant basculer dans l'alésage radial (15) de la paroi (14) traverse cet alésage, et par ses extrémités en saillie, est accouplé au piston de plaque (16) et à la douille de plaque (17),
- entre la tige de traction (12) et la seconde plaque de serrage (10), est monté un organe d'avance (21) s'opposant en direction axiale à la force de traction.

3. Mandrin à goujons de serrage selon la revendication 2, **caractérisé en ce que** l'organe d'avance (21) est constitué par un ressort de poussée (22).

4. Mandrin à goujons de serrage selon la revendication 2, **caractérisé en ce que** l'organe d'avance (21) est constitué par un piston de poussée (23) qui peut être actionné à travers un raccord d'agent de pression (24).

5. Mandrin à goujons de serrage selon une des revendications 2 à 4, **caractérisé en ce que** la seconde plaque de serrage (10) est en deux parties, à savoir la douille de plaque (17) et un disque de plaque (34) entre lesquelles sont montés au moins trois organes d'équilibrage (28) agissant en direction axiale.

6. Mandrin à goujons de serrage selon la revendication 5, **caractérisé en ce que** les organes d'équilibrage (28) sont constitués par des ressorts de poussée.

7. Mandrin à goujons de serrage selon la revendication 5, **caractérisé en ce que** les organes d'équilibrage (28) sont constitués par des pistons de poussée actionnables à travers un raccord d'agent de pression.

8. Mandrin à goujons de serrage selon une des revendications 5 à 7, **caractérisé en ce que** la douille de plaque (17) est solidaire en traction d'un insert à calotte (25) qui est engagé par un collet annulaire (26) dans un logement de collet du disque de plaque (34) situé du côté éloigné de la douille de plaque (17).

9. Mandrin à goujons de serrage selon une des revendications 2 à 8, **caractérisé en ce que** plusieurs des organes d'accouplement (18) sont disposés dans des alésages radiaux, répartis régulièrement à la périphérie du logement (13).

10. Mandrin à goujons de serrage selon une des revendications 2 à 9, **caractérisé en ce que** l'organe d'accouplement (18) présente de part et d'autre d'un bourrelet central (19) un rétrécissement (20).

11. Mandrin à goujons de serrage selon une des revendications 1 à 10, **caractérisé en ce que** la première plaque de serrage (9) est guidée par un collet de plaque (29) dans le corps de mandrin (5).
